Europäisches Patentamt

European Patent Office

Office européen des brevets

(19)

(11) Numéro de publication : **0 345 224 B1**

(12) **FASCICULE DE BREVET EUROPEEN**

(45) Date de publication du fascicule du brevet :
**10.06.92 Bulletin 92/24**

(51) Int. Cl.⁵ : **G04C 3/14, H02P 8/00**

(21) Numéro de dépôt : **89810408.8**

(22) Date de dépôt : **31.05.89**

(54) **Procédé d'alimentation d'un moteur pas à pas monophasé pour pièce d'horlogerie.**

(30) Priorité : **01.06.88 CH 2073/88**

(43) Date de publication de la demande :
**06.12.89 Bulletin 89/49**

(45) Mention de la délivrance du brevet :
**10.06.92 Bulletin 92/24**

(84) Etats contractants désignés :
**AT BE CH DE ES FR GB GR IT LI LU NL SE**

(56) Documents cités :
**EP-A- 0 077 293
EP-A- 0 097 350
EP-A- 0 253 153
US-A- 4 361 410
BULLETIN ANNUEL DE LA SOCIETE SUISSE
DE CHRONOMETRIE, vol. 10, 1981, pages
185-188, Neuchatel, CH; J.-C. BERNEY:
"Methodeparticulière d'alimentation d'un
moteur pas-à-pas de type lavet"**

(73) Titulaire : **DETRA SA
35, Rue Scholl
CH-2504 Bienne (CH)**

(72) Inventeur : **Tu, Mai Xuan
Blancherie 34
CH-1022 Chavannes (CH)**
Inventeur : **Schwab, Michel
Rue du Cornouiller 4
CH-2502 Bienne (CH)**

(74) Mandataire : **Rochat, Daniel Jean et al
Bovard SA Ingénieurs-Conseils ACP
Optingenstrasse 16
CH-3000 Bern 25 (CH)**

**Description**

La présente invention a pour objet un procédé d'alimentation d'un moteur pas à pas pour pièce d'horlogerie et un circuit d'entraînement pour sa mise en oeuvre.

Plusieurs types d'alimentation ont déjà été proposés ou utilisés pour alimenter la bobine du moteur d'une montre à quartz. C'est le cas, par exemple, décrit dans le brevet suisse CH-A-634 194, où la bobine du moteur est alimentée par une impulsion de tension de durée et d'amplitude constantes. Ce mode d'alimentation a comme inconvénient une trop grande consommation d'énergie; en effet, pour éviter un mauvais fonctionnement du moteur en cas de chute de tension ou d'augmentation de la résistance interne de la pile, ou encore en cas d'une augmentation de la charge, la bobine du moteur est suralimentée dans les conditions de fonctionnement normales.

D'autres solutions ont été apportées, permettant d'adapter l'alimentation du moteur en fonction de la charge, par exemple la solution décrite dans le brevet EP-A-0 021 320.

Ces solutions présentent l'inconvénient de devoir utiliser un circuit analogique de détection du pas raté et un circuit logique de correction assez compliqués.

La publication de demande de brevet EP-0097 350 propose un procédé d'alimentation qui vise à remédier à ces inconvénients. Selon ce procédé, la durée de chaque impulsion motrice hachée se prolonge jusqu'au moment où la valeur d'un paramètre, que le circuit d'entraînement détecte, dépasse une limite prédéterminée. Ainsi chaque impulsion a pour effet de provoquer une avance d'un pas du rotor, et il n'y a plus de "pas raté".

Cependant, le procédé décrit dans le document susmentionné nécessite des circuits compliqués et ne permet pas une économie d'énergie maximale. En effet, les circuits doivent fournir des valeurs limites supérieure et inférieure pour le courant de la bobine et, de ce fait, la source ne peut pas alimenter la bobine avec une courant qui croît librement avec la charge.

C'est le but de la présente invention de remédier aux inconvénients cités ci-dessus et de proposer un procédé d'alimentation d'un moteur pas à pas permettant d'économiser l'énergie fournie par la pile.

L'invention sera mieux comprise à la lecture de la description qui suit, en se référant aux dessins annexés, dans lesquels:
– la fig. 1 représente le dessin de principe d'un moteur pas à pas du type monophasé bipolaire;
– la fig. 2 représente le diagramme de couples statiques d'un moteur pas à pas du type précité;
– la fig. 3a représente un type d'impulsions d'alimentation de ce moteur;
– la fig. 3b représente un deuxième type d'impulsions d'alimentation;
– la fig. 4 représente le courant dans la bobine du moteur lorsqu'elle et alimentée par une impulsion du type illustré à la fig. 3b, le moteur n'étant pas chargé par un couple mécanique;
– la fig. 4b représente le même courant que celui de la figure 4a, mais dans le cas, le moteur et chargé par un couple mécanique de 0,2 $\mu$Nm;
– la fig. 5a représente le courant et la tension appliqués à la bobine selon le procédé d'alimentation prévu par l'invention, le moteur n'étant pas chargé par un couple mécanique;
– la fig. 5b représente le courant et la tension appliqués au moteur selon le même procédé d'alimentation de al fig. 5a, mais le moteur étant chargé par un couple mécanique;
– la fig. 6 illustre la variation du courant pendant l'intervalle de temps $T_{5i}$ séparant deux impulsions partielles;
– la fig. 7 représente le schéma-bloc d'un exemple de réalisation du procédé d'alimentation selon l'intervention;
– la fig. 8 représente le détail de l'élément 11 du schéma-bloc de la fig. 7;
– la fig. 9 représente le détail de l'élément 14 du schéma-bloc de la fig. 7.

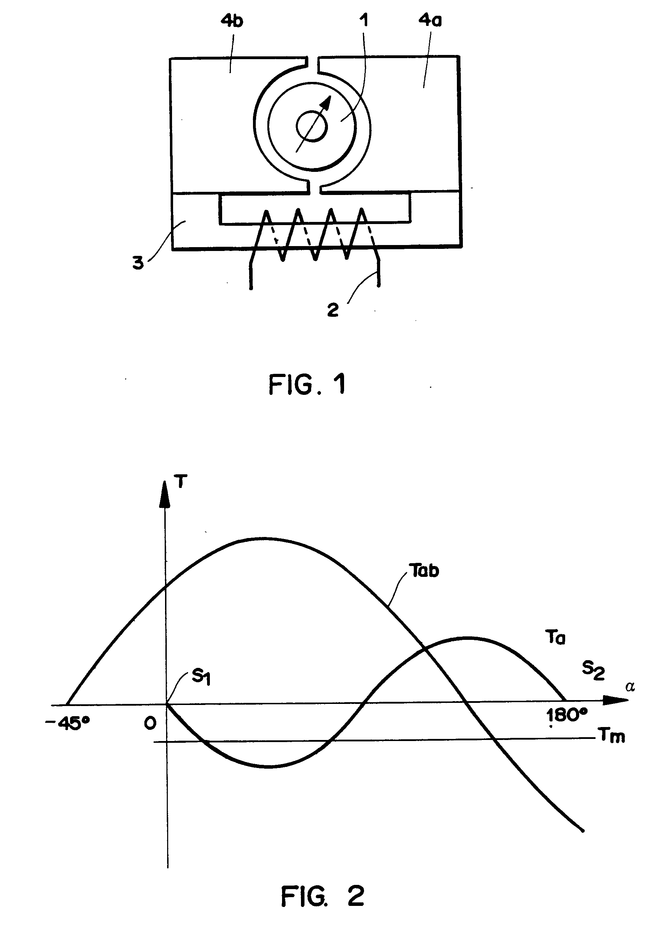

La figure 1 représente de manière schématique une exécution de principe d'un moteur pas à pas du type monophasé, bipolaire. Ce moteur est constitué d'un rotor comportant un aimant permanent cylindrique 1 à aimantation diamétrale, d'un stator comportant une bobine 2, un noyau de bobine 3 et les pièces polaires 4a et 4b réalisées en matériau ferromagnétique doux.

La figure 2 représente les couples agissant sur le rotor du moteur en fonction de la position angulaire $\alpha$. Le couple de positionnement $T_a$ est dû à l'interaction entre l'aimant et la géométrie des pièces polaires statoriques. Le couple mutuel $T_{ab}$ est dû à l'interaction entre le champ créé par la bobine lorsque celle-ci est alimentée. Le couple $T_m$ représente la somme de tous les couples d'origine mécanique agissant sur le rotor. Cette figure montre que les couples $T_a$ et $T_{ab}$ sont déphasés d'un angle d'environ 46 degrés. Au repos, le rotor est positionné initialement au point $S_1$ grâce au couple $T_a$. Lorsqu'une impulsion de tension est envoyée à la bobine, le rotor se déplace en direction de $S_2$ sous l'action du couple $T_{ab}$.

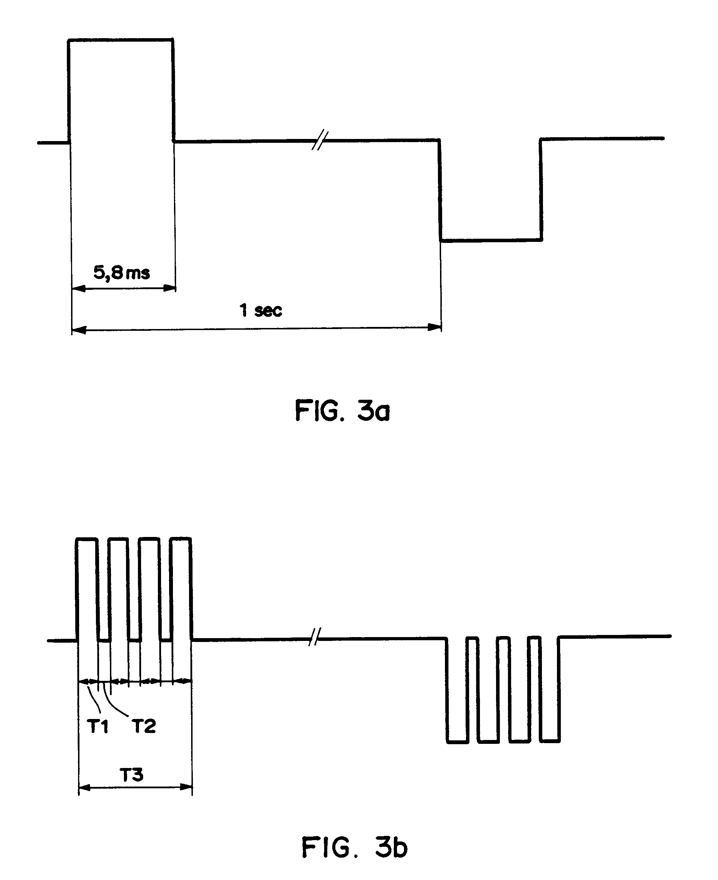

A l'ordinaire, la bobine du moteur est alimentée par une impulsion à tension et à durée constantes, comme l'illustre la figure 3a. La durée de l'impulsion est choisie suffisamment longue, de façon à permettre au moteur de franchir le pas dans les conditions défavorables, comme, par exemple, dans le cas d'une chute de tension de la pile, ou encore dans le cas d'une augmentation du couple mécanique $T_m$. Cependant, la plupart du temps, le moteur n'est pas chargé et fonctionne à sa tension nominale;

la durée constante et suffisamment longue présente de ce fait une perte d'énergie inutile dans les conditions de fonctionnement normales.

La figure 3b représente une alimentation à tension hachée dans laquelle la durée totale $T_3$, ainsi que les durées $T_1$ et $T_2$ sont constantes. Une telle alimentation, assez bien connue de la littérature technique, permet d'adapter la tension de la pile à celle du moteur par le biais du rapport des durées $T_1/T_2$. Cependant, ce type d'alimentation présente les mêmes désavantages au point de vue consommation d'énergie que celui représenté à la figure 3a, à cause des durées constantes $T_1$, $T_2$ et $T_3$.

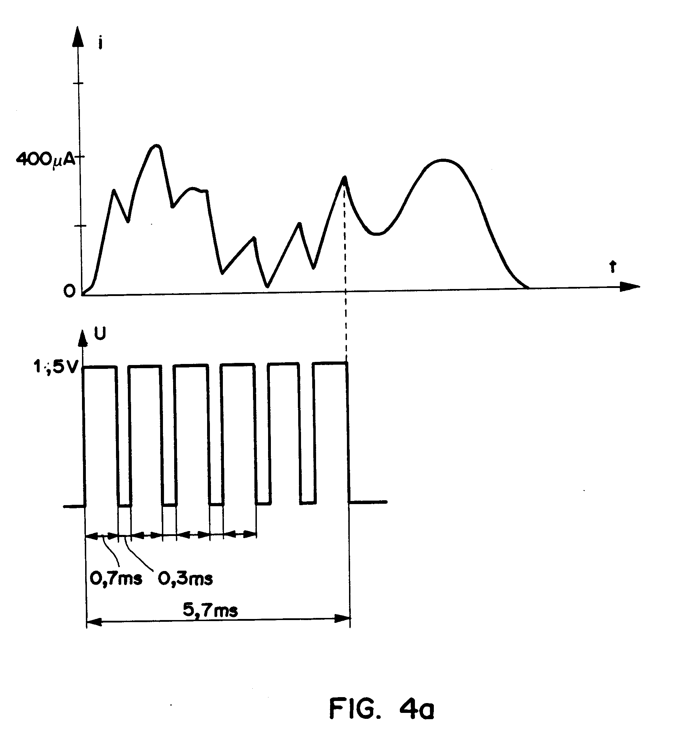

La figure 4a représente le courant, ainsi que la tension appliqués au moteur selon le mode d'alimentation précité, le moteur n'étant pas chargé par un couple mécanique, et les durées $T_1$, $T_2$, $T_3$ ont été fixées à 0,7, 0,3 et 5,7 ms. Dans ces conditions, le moteur a franchi son pas, c'est-à-dire que le rotor a fait une rotation de 180°.

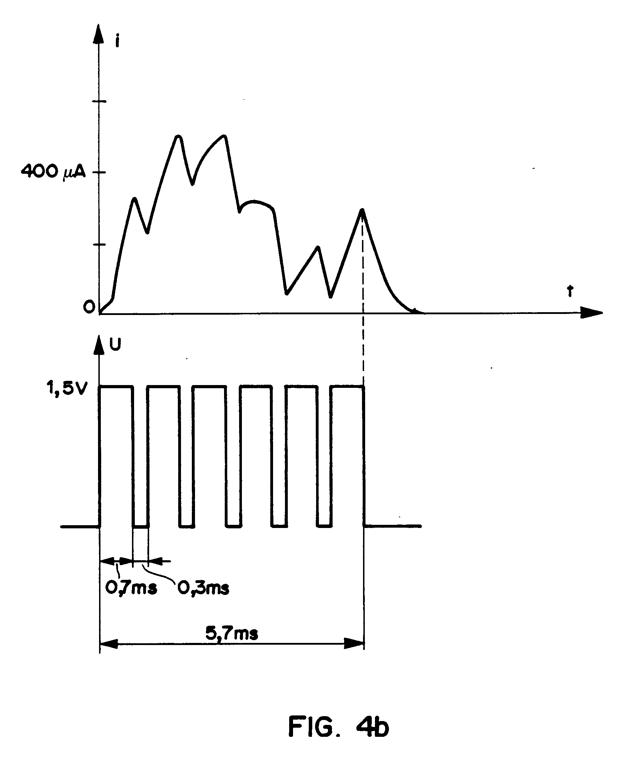

Dans la fig. 4b, on a appliqué la même alimentation que celle de la figure 4a, mais le dernier est chargé par un couple mécanique de 0,2 μNm. Dans ce cas, le moteur a raté son pas et le rotor, après une rotation d'un angle de moins de 90°, est revenu à sa position initiale.

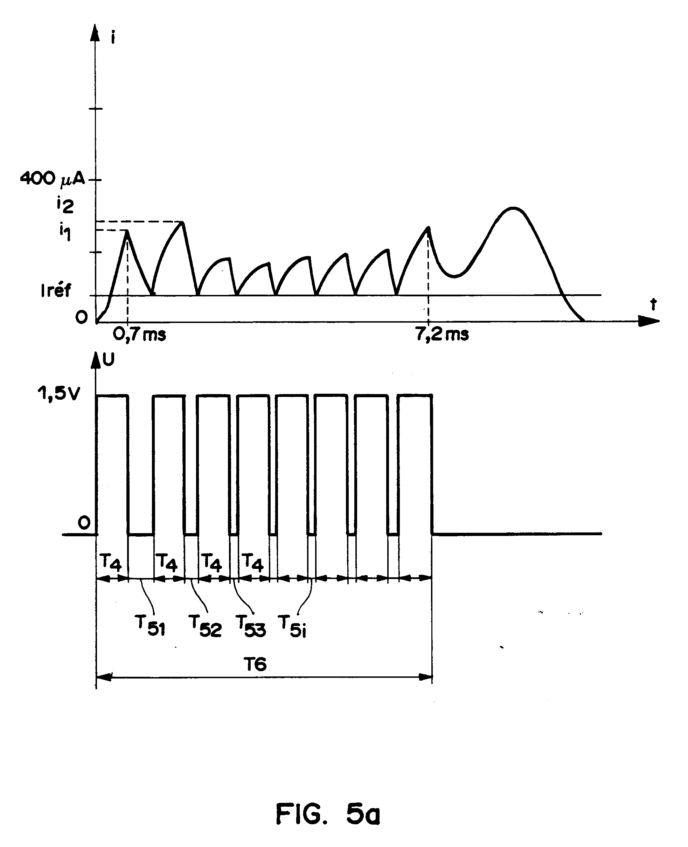

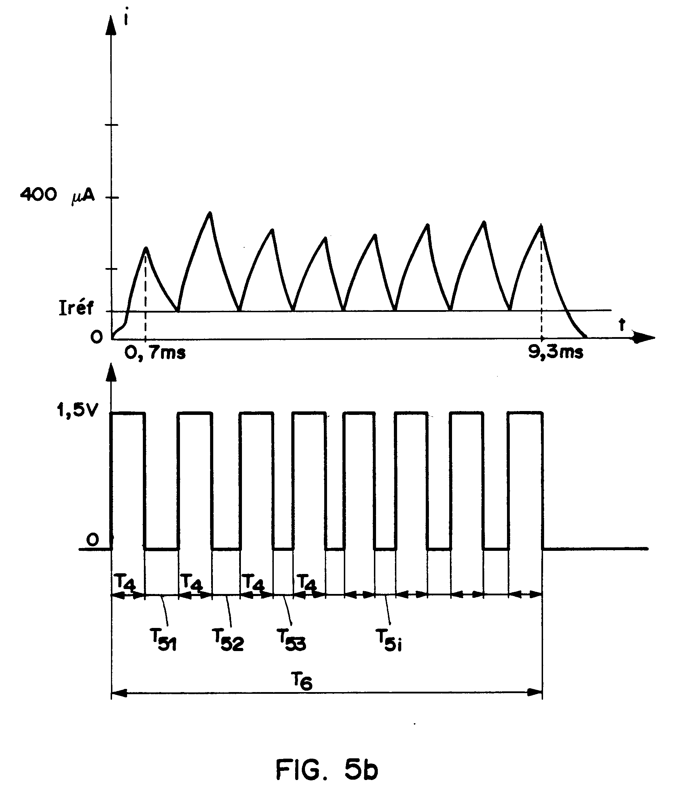

La figure 5a représente le courant et la tension appliqués à la bobine, selon le procédé d'alimentation prévu par la présente invention, le moteur n'étant pas chargé par un couple mécanique.

L'impulsion de tension hachée de durée totale $T_6$ est formée par 8 impulsions partielles de durée constante $T_4$ de 0,7 ms, séparées par des intervalles de Temps $T_{51}$, $T_{52}$, ...$T_{5i}$ de durée variable. La succession des impulsions partielles se fait de la façon suivante : initialement, la bobine est alimentée par une impulsion de tension constante de durée $T_4$ de 0,7 ms, le courant dans la bobine augmente de zéro à la valeur $i_1$, selon l'équation de tention :

$$U = Ri + L\frac{di}{dt} + K.\Omega \quad (1)$$

dans laquelle :

    U = tension appliquée

    L = inductance

    i = courant

    t = temps

    k = facteur de couplage exprimant la variation du flux mutuel entre l'aimant et la bobine

    $\Omega$ = vitesse angulaire

Après cette première impulsion partielle de tension, c'est-à-dire à partir de $t = T_4$, la bobine du moteur est mise en court-circuit. Le courant dans la bobine varie, à partir de cet instant, selon l'équation :

$$O = Ri + L\frac{di}{dt} + K.\Omega \quad (2)$$

Lorsque ce courant décroît jusqu'à une valeur de référence $I_{réf}$, c'est-à-dire à l'instant $t = T_4 + T_{51}$, la bobine est de nouveau alimentée par une deuxième impulsion partielle de tension constante de durée $T_4$.

Le courant dans la bobine augmente de la valeur $I_{réf}$ à la valeur $i_2$ et la bobine du moteur est de nouveau mise en court-circuit à l'instant $t = 2.T_4 + T_{51}$ et ainsi de suite. Pour ce cas de fonctionnement, c'est-à-dire lorsque le moteur n'est pas chargé, la durée totale $T_6$ de l'impulsion hachée est de 7,2 ms.

La figure 5b représente le courant et la tension appliqués au moteur selon le même procédé d'alimentation que celui de la figure 5a, mais le moteur est chargé par un couple mécanique de 0,2 μNm. La durée totale de l'impulsion $T_6$ passe de 7,2 ms du cas précédent à 9,3 ms du cas présent. Il existe donc une adaptation automatique de la durée totale de l'impulsion en fonction de la charge du moteur, et c'est grâce à cette adaptation que le procédé d'alimentation selon l'invention permet d'économiser l'énergie fournie par la pile.

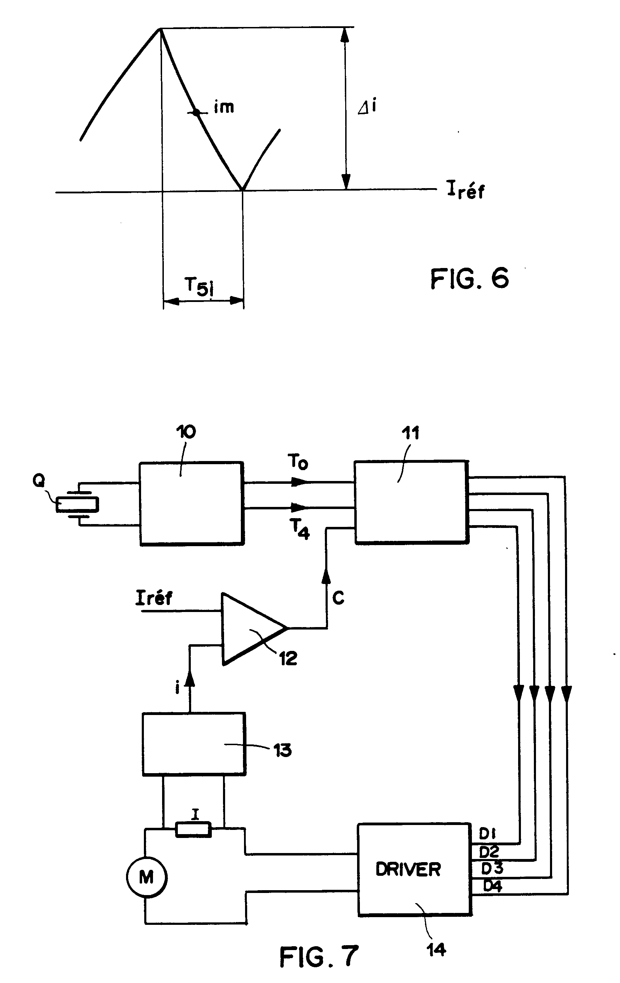

La figure 6 représente la variation du courant pendant l'intervalle de temps $T_{5i}$ séparant deux impulsions partielles de tension. La bobine du moteur étant mis en court-circuit pendant cet intervalle de temps, on obtient par conséquent à partir de l'équation (2) :

$$T_{5i} \sim \frac{L \cdot \Delta i}{Ri_m + k\Omega} \quad (3)$$

L'équation (3) montre que la durée de l'intervalle de temps $T_{5i}$ dépend de la vitesse de rotation du moteur. Une augmentation du couple mécanique du moteur provoque une diminution de la vitesse de rotation $\Omega$, ce qui entraînera une augmentation de l'intervalle $T_{5i}$.

La durée totale $T_6$ de l'impulsion hachée est donnée par :

$$T_6 = n.T_4 + \sum_{i=1}^{n-1} T_{5i} \quad (4)$$

Dans cette équation, n représente le nombre total d'impulsions partielles du durée $T_4$ (n = 8 dans l'exemple illustré dans les figures 5a et 5b).

Les équations (3) et (4) permettant d'expliquer l'adaptation de la longueur d'impulsion en fonction de la charge par le procédé d'alimentation proposé par la présente invention.

Le figure 7 représente le schéma bloc d'un exemple de réalisation du procédé d'alimentation selon l'invention. Le signal de la base de temps provenant de l'oscillateur Q est envoyé au circuit de division et de mise en forme 10, à la sortie duquel on obtient la période d'alimentation $T_o$ du moteur et la durée $T_4$ des impulsions partielles; Les signaux $T_o$ et $T_4$, ainsi que le signal C à la sortie du comparateur 12 sont envoyés dans le circuit logique 11, lequel fournit à l'étage de sortie (Driver) 14 les signaux de commande $D_1$, $D_2$, $D_3$ et $D_4$.

Une résistance de mesure r est branchée en série avec le moteur M à la sortie du Driver 14 et le bloc de mesure 13 transforme la tension aux bornes de la résistance de mesure r en un signal donnant l'image du courant i avant de l'envoyer au comparateur 12.

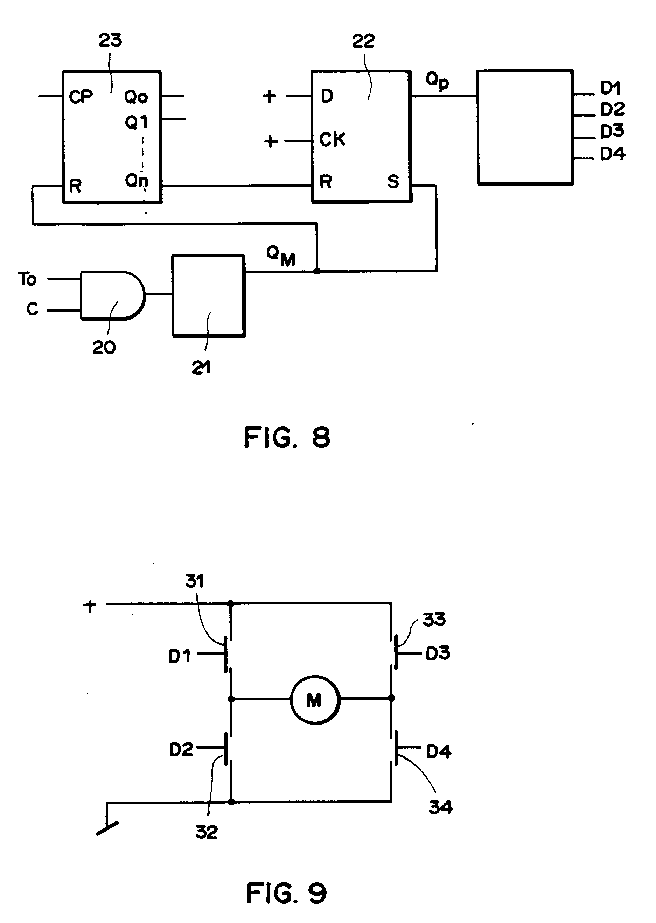

La figure 8 représente une variante d'exécution de l'élément 11 du schéma bloc de la figure 7. Les signaux C et $T_0$ provenant du comparateur 12 et du circuit de division et de mise en forme 10 sont envoyés dans la porte "ET" 20, dont la sortie est envoyée dans la bascule monostable 21. La sortie $Q_M$ de la bascule 21 actionne en même temps l'enclenchement (set) "S" de la bascule D 22 et la mise à zéro (reset) "R" du compteur 23. La remise à zéro R de la bascule D est commandé par le signal $Q_n$ du compteur 23. La sortie $Q_D$ de la bascule D passe par un circuit logique classique 24 pour délivrer les signaux de commande $D_1$, $D_2$, $D_3$, $D_4$. La figure 9 représente le détail de l'élément 14 (Driver) du schéma bloc de la figure 7. Les transistors de sortie 31, 32, 33, 34 sont montés en pont en H et commandés par des signaux $D_1$, $D_2$, $D_3$, $D_4$, provenant du circuit 24.

La figure 5a montre que lorsque le moteur n'est pas chargé, le courant à la fin de l'impulsion prend un temps important par rapport aux autres valeurs de $T_{5i}$ pour atteindre la valeur $I_{réf}$.

Les mesures ont montré que l'augmentation de cette durée apparaissait lorsque le moteur avait franchi avec facilité son pas; de ce fait, il est inutile de prolonger l'alimentation après l'apparition de ce phénomène.

C'est ce critère qui permet de déterminer la durée $T_{réf}$. Ainsi, le nombre des impulsions élémentaires de durée $T_4$ apparaissant dans chaque impulsion hachée peut être fixe et correspondre à un nombre prédéterminé, mais le circuit de commande peut aussi être agencé de manière que l'impulsion hachée soit interrompue dès qu'une période $T_{5i}$ atteint la donnée de référence $T_{réf}$.

Un agencement de ce genre peut être encore perfectionné de manière à produire une économie d'énergie maximale. En effet, on a dit plus haut que les impulsions élémentaires avaient une durée prédéterminée et fixe $T_4$. Cependant, cette durée peut aussi être prévue variable de la manière suivante: dans le cas où l'interruption de l'impulsion intervient un certain nombre de fois en suivant, par détection de la durée $T_{réf}$ et non pas par détection du nombre maximum d'impulsions élémentaires prévu, cette situation peut être détectée et il est possible de transmettre alors au circuit un ordre tel que la valeur $T_4$ passe de la valeur initiale à une autre valeur, plus courte. Inversément si, après le raccourcissement des impulsions $T_4$, la fin de l'impulsion hachée est provoquée un certain nombre de fois en suivant, par détection du nombre maximum prévu pour les impulsions élémentaires, alors le circuit revient à la fourniture d'impulsions élémentaires ayant la largeur $T_4$ initiale.

## Revendications

1. Procédé d'alimentation d'un moteur pas à pas monophasé pour pièce d'horlogerie, adapté pour fournir au moteur des impulsions de tension hachées de durée ($T_6$) variable en fonction des conditions de charge et en fonction de la tension d'alimentation du moteur, caractérisé en ce que chaque dite impulsion de tension hachée est composée d'une suite d'impulsions partielles de tension de même polarité et de durée ($T_4$) constante, et en ce que les intervalles de temps ($T_{5i}$) séparant les dites impulsions partielles de tension sont variables en fonction des conditions de charge et en fonction de la tension d'alimentation du moteur.

2. Procédé selon la revendication 1, caractérisé en ce que pendant les dits intervalles de temps (T5i), la bobine du moteur est mise en court-circuit.

3. Procédé selon les revendications 1 et 2, caractérisé par le fait que chaque dit intervalle de temps ($T_{5i}$) est délimité par la fin d'une dite impulsion partielle de durée constante ($T_4$) et par l'instant suivant cette fin où le courant de la bobine est plus petit ou égal à une valeur de référence ($I_{réf}$).

4. Procédé selon la revendication 1, caractérisé en ce que toute impulsion hachée est interrompue si le nombre des impulsions partielles dans cette impulsions hachée atteint une valeur maximale prédéterminée.

5. Procédé selon la revendication 1 ou la revendication 4, caractérisé en ce que toute impulsion hachée est interrompue si un des dits intervalles de temps ($T_{5i}$) de cette impulsion dépasse une valeur de référence ($T_{réf}$).

6. Procédé selon les revendications 1, 2 et 3 ou selon les revendications 1, 2 et 4, caractérisé en ce que le bobine du moteur est mise en court-circuit entre deux dites impulsions hachées.

7. Procédé selon la revendication 6, caractérisé en ce que deux impulsions hachées successives de durée ($T_6$) sont de même polarité ou de polarité opposée.

8. Procédé selon les revendications 4 et 5, caractérisé en ce que la dite durée constante ($T_4$) des impulsions partielles est modifiée d'une première valeur à une deuxième valeur entre deux impulsions hachées successives, quand un nombre prédéterminé d'impulsions hachées successives ont été interrompues, par détection d'une même limite: un intervalle de temps ($T_{5i}$) a dépassé la valeur de référence ($T_{ref}$) ou le nombre des impulsions partielles a atteint la valeur prédéterminée.

9. Circuit d'entraînement d'un moteur pas à pas monophasé, pour la mise en oeuvre du procédé selon la revendication 1, comprenant un ensemble d'interrupteurs, des moyens de comptage de temps déterminant des périodes principales ($T_0$) se succédant avec une fréquence constante, et des moyens de commande agissant sur les interrupteurs pour exciter le moteur au cours de chaque période principale par une pluralité d'impulsions partielles en formant ensemble une impulsion hachée, ces moyens comprenant un ou plusieurs détecteurs capables de déterminer la durée des dites impulsions hachées en fonction des conditions de charge et de la tension d'a limentation du moteur, caractérisé en ce que les moyens de comptage sont agencés pour définir des périodes auxiliaires de durée constante, qui délimitent les impulsions partielles, et en ce que les moyens de commande comportent un détecteur réagissant à un paramètre de charge du moteur et déterminant des intervalles de temps qui ont une durée variable en fonction de la charge, et s'intercalent entre les impulsions partielles.

**Patentansprüche**

1. Verfahren zur Stromversorgung eines einphasigen Schrittmotores für eine Zeitmesseinrichtung, welche eingerichtet ist, um dem Motor zerhackte Spannungsimpulse einer variablen Dauer ($T_6$) in Funktion der Last und in Funktion der Speisespannung des Motores zuzuführen, dadurch gekennzeichnet, dass jeder der genannten zerhackten Spannungsimpulse aus einer Folge von partiellen Impulsen mit einer Spannung der gleichen Polarität und von konstanter Dauer ($T_4$) zusammengesetzt ist und dass die Zeitintervalle ($T_{5i}$), welche die genannten partiellen Spannungsimpulse trennen, in Funktion der Lastbedingungen und der Speisespannung des Motors variabel sind.

2. Verfahren nach Patentanspruch 1, dadurch gekennzeichnet, dass während den genannten Zeitintervallen (T5i) die Spule des Motors kurzgeschlossen wird.

3. Verfahren nach Patentanspruch 1 und 2, dadurch gekennzeichnet, dass jedes genannte Zeitintervall ($T_{5i}$) durch das Ende eines genannten partiellen Impulses von konstanter Dauer ($T_4$) und durch den Zeitpunkt, welcher diesem Ende folgt, begrenzt ist, wobei der Spulenstrom kleiner oder gleich einem Referenzwert ($I_{ref}$) ist.

4. Verfahren nach Patentanspruch 1, dadurch gekennzeichnet, dass der ganze zerhackte Impuls unterbrochen ist, wenn die Zahl der partiellen Impulse in diesem zerhackten Impuls einen vorbestimmten maximalen Wert erreicht.

5. Verfahren nach Patentanspruch 1 oder 4, dadurch gekennzeichnet, dass der ganze zerhackte Impuls unterbrochen wird, wenn eines der genannten Zeitintervalle ($T_{5i}$) dieses Impulses einen Referenzwert ($T_{ref}$) überschreitet.

6. Verfahren nach den Patentansprüchen 1, 2 und 3 oder nach den Ansprüchen 1, 2 und 4, dadurch gekennzeichnet, dass die Spule des Motors zwischen zwei der genannten zerhackten Impulse kurzgeschlossen wird.

7. Verfahren nach Patentanspruch 6, dadurch gekennzeichnet, dass zwei aufeinanderfolgende zerhackte Impulse der Dauer ($T_6$) die gleiche Polarität oder eine entgegengesetzte Polarität aufweisen.

8. Verfahren nach den Patentansprüchen 4 und 5, dadurch gekennzeichnet, dass die genannte konstante Dauer ($T_4$) der partiellen Impulse von einem ersten Wert zu einem zweiten Wert zwischen zwei aufeinanderfolgenden zerhackten Impulsen geändert wird, wenn eine vorbestimmte Anzahl aufeinanderfolgender zerhackter Impulse unterbrochen wurden durch Erfassung der gleichen Grenze: ein Zeitintervall ($T_{5i}$) hat den Referenzwert ($T_{ref}$) überschritten oder die Zahl der partiellen Impulse hat den vorbestimmten Wert erreicht.

9. Schaltung zum Antrieb eines einphasigen Schrittmotores zur Ausführung des Verfahrens nach Patentanspruch 1 mit einem Satz von Schaltern, Zeitzählmitteln, welche Hauptperioden ($T_o$) bestimmen, welche mit einer konstanten Frequenz aufeinanderfolgen und Steuermitteln, welche auf die Schalter einwirken, um den Motor im Zuge jeder Hauptperiode durch eine Mehrzahl von partiellen Impulsen, welche zusammen einen zerhackten Impuls bilden, anzuregen, wobei die Mittel einen oder mehrere Detektoren umfassen, welche die Dauer der genannten zerhackten Impulse als Funktion der Lastbedingungen und der Speisespannung des Motors bestimmen können, dadurch gekennzeichnet, dass die Zählmittel derart angeordnet sind um Hilfsperioden mit konstanter Dauer zu definieren, welche die partiellen Impulse begrenzen und dass die Steuermittel einen Detektor umfassen, der auf einen Lastparameter des Motors reagiert und die Zeitintervalle bestimmt, welche eine variable Dauer als Funktion der Last aufweisen und zwischen den partiellen Impulsen auftreten.

**Claims**

1. Power supply method for a monophased stepping motor for a time piece, adapted to provide the motor with chopped voltage pulses of duration $T_6$ variable according to the load conditions and according to the voltage supply of the motor, characterized in that each said pulse of chopped tension is composed of a sequence of partial pulses of voltage of the same polarity and of a constant length ($T_4$), and in that the spacing durations ($T_{5i}$) separating the said partial voltage pulses are variable according to the load conditions and according to the supply voltage of the motor.

2. Method according to claim 1, characterized in that during the said intervals of time (T5i), the coil of the motor is short-circuited.

3. Method according to claims 1 and 2, characterized by the fact that each said interval of time ($T_{5i}$) is delimited by the end of a said partial pulse of constant length ($T_4$) and by the instant following this end where the current of the coil is smaller than or equal to a reference value ($I_{ref}$).

4. Method according to claim 1, characterized in that all chopped pulse is interrupted if the number of partial pulses in this chopped pulse reaches a predetermined maximum value.

5. Method according to claim 1 or claim 4, characterized in that all chopped pulse is interrupted if one of said intervals of time ($T_{5i}$) of this pulse exceeds a reference value ($T_{ref}$).

6. Method according to claims 1, 2 and 3 or according to claims 1, 2 and 4, characterized in that the coil of the motor is short-circuited between two said chopped pulses.

7. Method according to claim 6, characterized in that two successive chopped pulses of length ($T_6$) are of the same polarity or of opposite polarity.

8. Method according to claims 4 and 5, characterized in that said constant length ($T_4$) of the partial pulses is modified from a first value to a second value between two successive chopped pulses, when a predetermined number of successive chopped pulses have been interrupted, by detecting one same limit: an interval of time ($T_{5i}$) had exceeded the reference value ($T_{ref}$) or the number of partial pulses has reached the predetermined value.

9. A circuit for driving a monophased stepping motor for implementing the method according to claim 1, comprising a set of switches, time counting means determining main periods ($T_o$) succeeding one another with a fixed frequency, and control means acting on the switches to excite the motor during each main period by a plurality of partial pulses forming together a chopped pulse, these means comprising one or several detectors capable of determining the duration of said chopped pulses according to the load conditions and the feed voltage of the motor, characterized in that the counting means are arranged to define auxiliary periods of constant length which delimit the partial pulses, and in that the control means comprise a sensor reacting to a load parameter of the motor and determining intervals of time of variable length according to the load, and which intervene between the partial pulses.

FIG. 1

FIG. 2

5,8 ms

1 sec

## FIG. 3a

T1    T2

T3

## FIG. 3b

FIG. 4a

FIG. 4b

FIG. 5a

FIG. 5b

FIG. 6

FIG. 7

FIG. 8

FIG. 9